# EUROPEAN PATENT APPLICATION

(11) **EP 2 869 587 A1**
(43) Date of publication of application: **06.05.2015**
(21) Application number: 13810720.6
(22) Date of filing: 24.06.2013
(51) Int. Cl.: H04N 21/436, H04N 21/4227

(54) **MULTIMEDIA DEVICE AND REMOTE CONTROL DEVICE FOR SYNCHRONIZING SCREEN, AND METHOD FOR SAME**

(30) Priority: 27.06.2012 KR 20120069292; 26.11.2012 KR 20120134669
(71) Applicant: Electronics And Telecommunications Research Institute, Daejeon-si 305-700 (KR)
(72) Inventor: KIM, Seung-Chul, Daejeon 305-509 (KR); PARK, Sang-Taick, Seoul 121-724 (KR); HONG, Jin-Woo, Daejeon 305-500 (KR)
(74) Representative: Betten & Resch
(86) International application number: PCT/KR2013/005522
(87) International publication number: WO 2014/003377

(57) **Abstract**

Disclosed is a multimedia device for synchronizing a screen with a remote control device. The multimedia device comprises: a communication portion for communicating with the remote control device; and a control portion for outputting data of a plurality of images on a display portion, and transmitting the data of the images that is outputted on the display portion to the remote control device through the communication portion, thereby synchronizing the screens between the multimedia device and the remote control device.

## Description

### Technical Field

The following description relates to a multimedia device and a remote control device for remotely controlling the multimedia device, and more particularly, to technology that enables the remote control device to share information displayed by the multimedia device.

### Background Art

Technology, which remotely controls a multimedia device such as a television (TV), is known. A remote control device provided for the remote control is commonly called a remote controller, which includes number keys, letter keys, function keys, etc. Therefore, a user can remotely control the multimedia device by manipulating the keys of the remote controller. However, although the user can remotely control the multimedia device with the remote controller, the user should inevitably check the manipulated result through an output screen of the multimedia device. Also, when the user manipulates the remote controller from a location at which the screen of the multimedia device is not visible, it becomes increasingly inconvenient. Also, when desiring to select and set a menu instead of simply changing a channel, the user should necessarily manipulate the remote controller while looking at the screen.

As technology relevant to remote controllers, the invention of a remote controller for transmitting/receiving voice to/from an Internet protocol (IP) set-top box is known through Korean Patent Registration No. 10-0939914. The conventional invention relates to a multimedia system using a remote controller for transmitting/receiving voice to/from an IP set-top box, and fundamentally uses bidirectional communication technology between the IP set-top box and the remote controller. Specifically, the multimedia system includes: an IPTV that provides broadcast using the Internet; the IP set-top box that is connected to the IPTV, receives and converts video signals over the Internet, and transmits voice data using voice over IP (VoIP); a web camera that is connected to the IP set-top box, and monitors and transmits a compressed video over the Internet; and a radio frequency (RF) remote controller that controls the IP set-top box and transmits/receives voice to/from the IP set-top box over one wireless network selected from among ZigBee, Bluetooth, and IEEE 802.15.4. Like this, the conventional invention enables a video call through a TV screen at low cost using Internet TV. However, the conventional invention does not focus on remote control that is the original purpose of remote controllers. For this reason, there are still the above-described inconveniences of users relevant to manipulation of the remote controllers.

### Technical Problem

The following description relates to technology that enables a user to remotely control a multimedia device as the user wants, even without looking at a screen of the multimedia device.

### Technical Solution

In one general aspect, a multimedia device for screen synchronization with a remote control device includes: a communication unit configured to communicate with the remote control device; and a control unit configured to output a plurality of image data to a display unit and transmit the image data, output to the display unit, to the remote control device through the communication unit.

The control unit may generate a single image with the plurality of image data before outputting the plurality of image data to the display unit, output the generated single image data to the display unit, and transmit the generated single image data to the remote control device through the communication unit.

In generating the single image, when the plurality of image data include moving image data, the control unit may generate the single image with image data except the moving image data, synthesize the generated single image data with the moving image data, and output the synthesized image data to the display unit.

According to another aspect of the present invention, the multimedia device may further include a buffer memory configured to store the generated single image data, wherein when at least some of the single image data is changed, the control unit reflects the changed image data to generate a new single image, compares the newly generated single image data with the single image data stored in the buffer memory to obtain different image data, and transmits the obtained difference image data to the remote control device through the communication unit.

In another general aspect, a remote control device for screen synchronization with a multimedia device includes: a display unit; a communication unit configured to communicate with the multimedia device; and a control unit configured to receive a plurality of image data, displayed on a screen of the multimedia device, through the communication unit from the multimedia device, and output the received image data to the display unit.

The plurality of received image data may compose a single image.

The single image may be composed of all image data output to the screen of the multimedia device, all image data including no moving image data.

According to another aspect of the present invention, the remote control device may further include a buffer memory configured to store the single image data, wherein when difference image data is received through the communication unit from the multimedia device, the control unit generates a new single image with the received difference image data and the single image data stored in the buffer memory, and outputs the new single image to the display unit.

In another general aspect, a screen synchronization method, performed by a multimedia device, between the multimedia device and a remote control device, includes: generating a single image with a plurality of image data, wherein when the plurality of image data includes moving image data, the multimedia device generates the single image with image data except the moving image data; storing the generated single image data in a buffer memory; outputting the generated single image data to a screen, wherein when there are the moving image data, the multimedia device synthesizes the generated single image data with the moving image data and outputs the synthesized image data to the screen; transmitting the generated single image data to the remote control device; reflecting, when image data except the moving image data among the image data composing the single image data are changed after transmitting, the changed image data to generate a new single image; comparing the newly generated single image data with the single image data stored in the buffer memory to obtain difference image data; and transmitting the obtained difference image data to the remote control device.

In another general aspect, a screen synchronization method, performed by a multimedia device, between the multimedia device and a remote control device, includes: mixing a plurality of image data according to mixing rule information, wherein when the plurality of image data include moving image data, the multimedia device mixes moving image data with the plurality of image data according to the mixing rule information; outputting the mixed image data to a screen, wherein when there is moving image data, the multimedia device synthesizes the mixed image data with the moving image data and outputs the synthesized image data to the screen; transmitting the image data to be mixed and the mixing rule information to the remote control device; and transmitting, when the mixed image data is changed, the changed image data and changed mixing rule information to the remote control device.

In another general aspect, a screen synchronization method, performed by a remote control device, between a multimedia device and the remote control device, includes: receiving single image data, composed of a plurality of image data including no moving image data, from the multimedia device; outputting the received single image data to a screen; storing the received single image data in a buffer memory; receiving difference image data from the multimedia device; generating a new single image with the received difference image data and the single image data stored in the buffer memory; and outputting the newly generated single image data to the screen.

In another general aspect, a screen synchronization method, performed by a remote control device, between a multimedia device and the remote control device, includes: receiving a plurality of image data, including no moving image data, and mixing rule information from the multimedia device; storing the plurality of received image data in a buffer memory; mixing the plurality of received image data according to the received mixing rule information; outputting the mixed image data to a screen; receiving changed image data and changed mixing rule information from the multimedia device; mixing the changed image data with the plurality of image data stored in the buffer memory according to the changed mixing rule information; and outputting the mixed image data based on the changed mixing rule information to the screen.

Other features and aspects will be apparent from the following detailed description, the drawings, and the claims.

### Advantageous Effects

The present invention enables a remote control device to identically display a display screen of a multimedia device. Accordingly, a user can remotely control the multimedia device while looking at only a display screen of the remote control device, and check whether the multimedia device is accurately controlled through the display screen.

Moreover, in synchronizing a screen of the multimedia device with a screen of the remote control device, the present invention can synchronize the screens except for a moving image. Accordingly, time taken in screen synchronization between the two devices can be shortened.

### Description of Drawings

FIG. 1 is a configuration diagram illustrating a remote multimedia display control system according to an embodiment of the present invention.
FIG. 2 is a block diagram illustrating a multimedia device whose screen is synchronized with a screen of a remote control device according to an embodiment of the present invention.
FIG. 3 is a block diagram illustrating the remote control device whose screen is synchronized with the screen of the multimedia device according to an embodiment of the present invention.
FIG. 4 is a flowchart illustrating a screen synchronization method, performed in the multimedia device, between the remote control device and the multimedia device according to an embodiment of the present invention.
FIG. 5 is a flowchart illustrating a screen synchronization method, performed in the multimedia device, between the remote control device and the multimedia device according to another embodiment of the present invention.
FIG. 6 is a flowchart illustrating a screen synchronization method, performed in the remote control device, between the remote control device and the multimedia device according to an embodiment of the present invention.
FIG. 7 is a flowchart illustrating a screen synchronization method, performed in the remote control device, between the remote control device and the multimedia device according to another embodiment of the present invention.

Throughout the drawings and the detailed description, unless otherwise described, the same drawing reference numerals will be understood to refer to the same elements, features, and structures. The relative size and depiction of these elements may be exaggerated for clarity, illustration, and convenience.

### Best Mode

The aspects described above and additional aspects of the present invention will be clarified through preferred embodiments to be described with reference to the accompanying drawings. Hereinafter, a description will be made such that those skilled in the art can easily understand and implement the present invention through the embodiments.

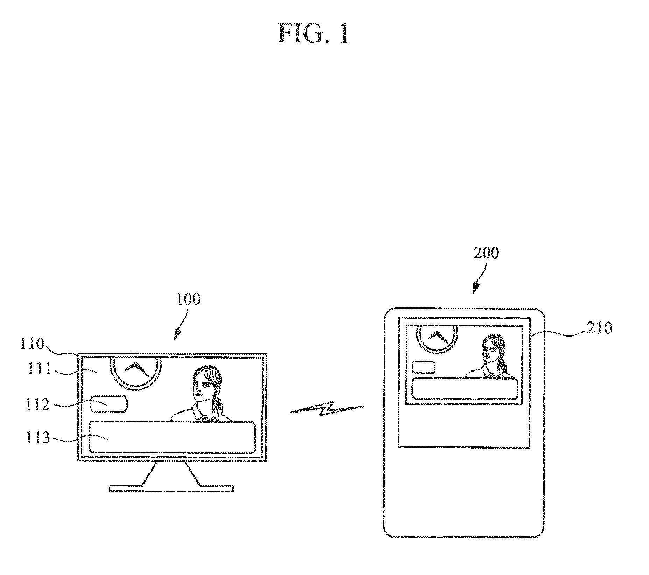

FIG. 1 is a configuration diagram illustrating a remote multimedia display control system according to an embodiment of the present invention.

Referring to FIG. 1, the remote multimedia display control system includes a multimedia device 100 and a remote control device 200. The multimedia device 100 may have an integration type in which a function of processing image data and a display function are integrated, and have a split type in which a display module is split from the multimedia device 100. For example, the multimedia device 100 may be an integration type TV or a split type set-top box. In FIG. 1, the multimedia device 100 with a display module integrated thereinto is illustrated as an example. As illustrated, the multimedia device 100 includes a display unit 110 for displaying a screen. Reference numeral 111 in the display unit 110 may refer to a background element occupying an entire screen area, and for example, refer to a moving image, a still image, or an image rendered by graphics processing. Reference numerals 112 and 113 may refer to screen elements which are mixed with and displayed on the background element, and the screen elements 112 and 113 may occupy a portion or all of a display screen. Screen elements may be displayed to transfer information to a user or for interacting with the user. The screen elements, for example, may include an input window that requests a text input from the user, a button or a point cursor image that requests selection or check by the user, etc. The multimedia device 100 performs screen synchronization with the remote control device 200. This will be described below.

The remote control device 200 is a device that enables a user to remotely control the multimedia device 100, and may be a device manufactured for only remote control, a smart phone or tablet personal computer (PC) with a remote control application installed therein, or the like. The remote control device 200 provides a user interface enabling a user to perform remote control. For example, although not shown in FIG. 1, the remote control device 200 may include a plurality of physical buttons for a user's remote control. Therefore, a user may remotely control the multimedia device 100 through button manipulation. Furthermore, as illustrated in FIG. 1, the remote control device 200 includes a display unit 210. The display unit 210 displays the same screen as a screen displayed by the multimedia device 100 by performing a screen synchronization function, and the screen may be displayed in an entire area or predetermined partial area of the display unit 210. Also, the display unit 210 may further display a graphical user interface (GUI) for a user's remote control. Therefore, a user may remotely control the multimedia device 100 with the GUI. Furthermore, the display unit 210 may include a touch panel for a touch input. Thus, a user may directly touch the display unit 210 to effect desired manipulation.

When a user manipulates the remote control device 200 for remotely controlling the multimedia device 100, the remote control device 200 transmits control information based on the user's manipulation to the multimedia device 100. Therefore, the multimedia device 100 performs a function corresponding to the received control information. For example, a button window requesting the user's selection is displayed on a screen of the multimedia device 100, and the same button window is also displayed on a screen of the remote control device 200, in which state if the user performs an input with an input means of the remote control device 200, control information corresponding to the user's input (key input, screen touch information, mouse cursor position, click, or the like) is transmitted to the multimedia device 100, whereupon the multimedia device 100 receives and analyzes the control information to perform a corresponding function.

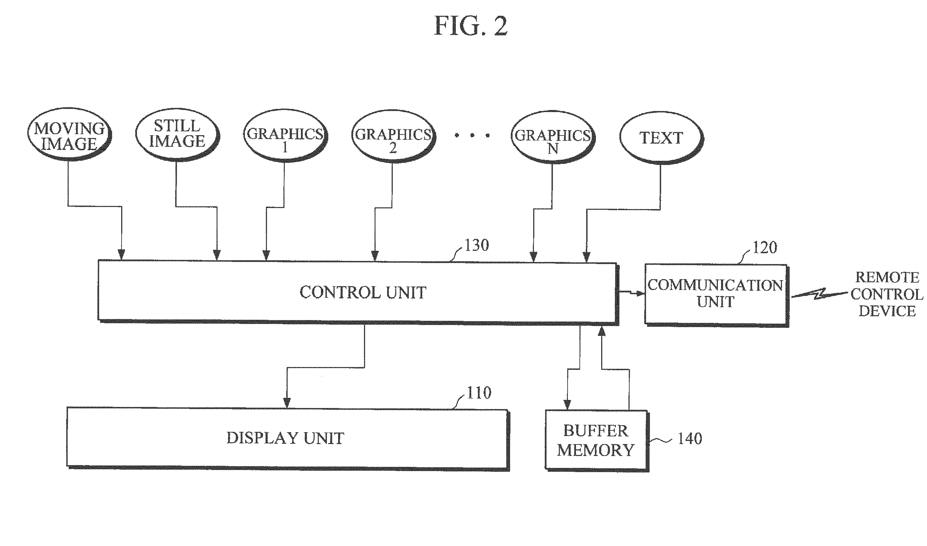

FIG. 2 is a block diagram illustrating a multimedia device whose screen is synchronized with a screen of a remote control device according to an embodiment of the present invention.

As illustrated, the multimedia device 100 includes the display unit 110, a communication unit 120, and a control unit 130. If the multimedia device 100 has the split type, the multimedia device 100 does not include the display unit 110 for displaying an image. The display unit 110 is an element for displaying an image, and for example, may be a liquid crystal display (LCD). The communication unit 120 is an element for bidirectional communication with the remote control device 200. For example, the communication unit 120 may be a communication module based on a short-distance wireless communication scheme such as Bluetooth, near-field communication (NFC), or the like. The control unit 130 is a control unit for controlling an overall operation of the multimedia device 100 and includes a processor for processing an image. The control unit 130 performs rendering on multimedia data such as moving image contents, still image contents, graphics contents, texts, etc., and outputs the rendered image data to the display unit 110 to display on a screen corresponding to the image data. Also, the control unit 130 transmits the rendered image data to the remote control device 200, for screen synchronization. At this time, the control unit 130 may transmit all of the rendered image data to the remote control device 200, or transmit the rendered image data except rendered moving image data to the remote control device 200.

Subsequently, when at least a portion of an entire image displayed by the display unit 110 is changed, the control unit 130 transmits relevant information to the remote control device 200 to continuously effect screen synchronization. At this time, the control unit 130 may transmit image data corresponding to an entirety of a changed screen to the remote control device 200, but, if a sufficient transmission speed and a sufficient image processing speed of the remote control device 200 are not supported, it is unable to ensure screen synchronization. Especially, in a moving image which inevitably requires a large amount of processed data due to a continuous change, it is unlikely to ensure screen synchronization. Therefore, in consideration of such a limitation, the present invention proposes a scheme that, when a display screen of the multimedia device 100 is changed it, does not transmit all of a changed screen image to the remote control device 200 but transmits only changed details to the remote control device 200, and thus can reduce an amount of transmitted data and an amount of processed data. Hereinafter, two schemes are proposed, and operation examples of the multimedia device 100 for the two schemes will be described.

### [Embodiment 1]

A first scheme uses a difference image. To use the difference image, the multimedia device 100 further includes a buffer memory 140 used for storing single image data. Hereinafter, a method of using the difference image will be described in detail. The control unit 130 mixes a plurality of rendered image data to generate a single image. At this time, when the rendered image data include moving image data, the control unit 130 may generate a single image with the moving image data added thereinto, or generate a single image with no moving image data. The control unit 130 outputs the generated single image data to the display unit 110, in which case when the single image does not include the moving image data, the control unit 130 synthesizes the single image with the moving image data and outputs the synthesized single image to the display unit 110. The control unit 130 stores the generated single image data in the buffer memory 140 and transmits the single image data to the remote control device 200 through the communication unit 120, for screen synchronization. Therefore, screen synchronization is made between the multimedia device 100 and the remote control device 200.

Subsequently, the control unit 130 detects a changed element from among moving image contents, still image contents, one or more graphics contents, and texts. Here, the moving image contents may be excluded from a detection target. When the single image includes the moving image data, the moving image contents are included in the detection target, and, when the single image does not include the moving image data, the moving image contents are excluded from the detection target. When a changed element is detected, the control unit 130 performs rendering and mixes rendered images to generate a new single image. The control unit 130 compares the newly generated single image with the single image stored in the buffer memory 140 to obtain a difference image. Since technology that compares two images to obtain a difference image is well known, a detailed description is not provided. When difference image data is obtained, the control unit 130 transmits the difference image data to the remote control device 200 through the communication unit 120. Accordingly, screen synchronization between the multimedia device 100 and the remote control device 200 is maintained. Also, in order to continuously maintain screen synchronization, the control unit 130 overwrites the newly generated single image data in the buffer memory 140.

### [Embodiment 2]

A second scheme uses information on a rule for mixing images, which will be referred as mixing rule information hereafter. The control unit 130 mixes a plurality of rendered image data according to the mixing rule information and outputs the mixed image data to the display unit 110. At this time, when the rendered image data includes moving image data, the control unit 130 may mix the image data including the moving image data according to the mixing rule information, or mix the image data except the moving image data. In the latter case, the mixing rule information does not include a rule on the moving image data. The control unit 130 outputs the mixed image data to the display unit 110, in which case when the mixed image does not include the moving image data, the control unit 130 synthesizes the mixed image with the moving image data and outputs the synthesized image to the display unit 110. Also, the control unit 130 transmits the rendered image data and the mixing rule information to the remote control device 200 through the communication unit 120, for screen synchronization, in which case the moving image data may not be transmitted. Therefore, screen synchronization is made between the multimedia device 100 and the remote control device 200.

Subsequently, the control unit 130 detects a changed element from among moving image contents, still image contents, one or more graphics contents, texts, and the mixing rule information. Here, the moving image contents may be excluded from a detection target. When the mixed image includes the moving image data, the moving image contents are included in the detection target, and, when the mixed image does not include the moving image data, the moving image contents are excluded from the detection target. When a changed element is detected, the control unit 130 transmits rendered images for a changed screen element and changed mixing rule information to the remote control device 200 through the communication unit 120. Accordingly, screen synchronization between the multimedia device 100 and the remote control device 200 is continuously maintained.

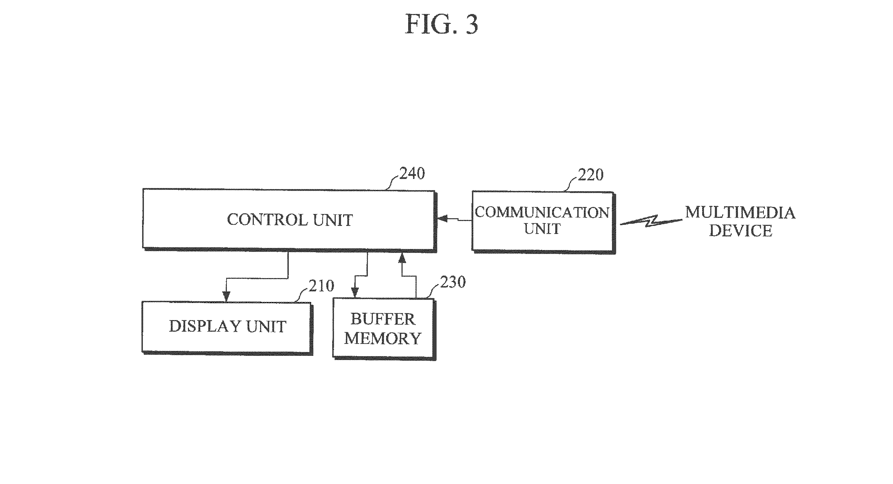

FIG. 3 is a block diagram illustrating the remote control device whose screen is synchronized with the screen of the multimedia device according to an embodiment of the present invention.

As illustrated, the remote control device 200 includes the display unit 210, a communication unit 220, a buffer memory 230, and a control unit 240. The display unit 210 may be an LCD, and for example, may be implemented as a touch screen LCD enabling touch manipulation. The communication unit 220 is an element for bidirectional communication with the multimedia device 100. The buffer memory 230 is used to store data received from the multimedia device 100. The control unit 240 is a control unit that controls an overall operation of the remote control device 200 and includes a processor for processing an image. The control unit 240 receives image data, displayed on a screen of the multimedia device 100, through the communication unit 220 from the multimedia device 100, and processes the received image data according to a display type of the display unit 210 to output the processed image data to the display unit 210. Subsequently, the control unit 240 receives information on a changed screen's details through the communication unit 220 from the multimedia device 100, and reflects the received information to reconstruct a screen of the display unit 210. The information on the changed screen details is changed according to the above-described Examples 1 and 2, and thus, the process of the control unit 240 is changed for changing a display screen. A detailed description on this will be made below.

### [Embodiment 3]

Example 3 is an operation example of the remote control device 200 responding to Example 1. The control unit 240 receives single image data through the communication unit 220 from the multimedia device 100. As described above in the Example 1, the single image data may include moving image data, or may not include the moving image data. The control unit 240 stores the received single image data in the buffer memory 230, and processes the received single image data according to the display type of the display unit 210 to output the processed single image data to the display unit 210. Then, the control unit 240 receives difference image data through the communication unit 220 from the multimedia device 100. The control unit 240 adds the received difference image data to the single image data stored in the buffer memory 230 to generate a new single image to be displayed by the display unit 210. The control unit 240 outputs the generated new single image to the display unit 210. Also, the control unit 240 overwrites the newly generated single image data in the buffer memory 230. Therefore, screen synchronization between the multimedia device 100 and the remote control device 200 is continuously maintained.

### [Embodiment 4]

Example 4 is an operation example of the remote control device 200 responding to the Example 2. The control unit 240 receives image data and mixing rule information through the communication unit 220 from the multimedia device 100. As described above in the Example 2, the image data received from the multimedia device 100 may include moving image data, or may not include the moving image data. The control unit 240 stores the received image data in the buffer memory 230. Also, the control unit 240 mixes the received image data according to the received mixing rule information to generate an image to be displayed by the display unit 210, and outputs the newly generated mixed image data to the display unit 210. Then, the control unit 240 receives at least one piece of changed image data and changed mixing rule information through the communication unit 220 from the multimedia device 100. The control unit 240 mixes the image data stored in the buffer memory 230 with the changed image data according to the changed mixing rule information to generate an image to be displayed by the display unit 210, and outputs the generated new mixed image data to the display unit 210. Also, the control unit 240 updates the buffer memory 230 with image data configuring the new mixed image data. Accordingly, screen synchronization between the multimedia device 100 and the remote control device 200 can be continuously maintained.

As described above, the remote control device 200 may synchronize a screen with the multimedia device 100. Accordingly, a user can remotely manipulate the multimedia device 100 easily while looking at only a displayed screen of the remote control device 200. Furthermore, the control unit 240 provides a function that enables a user to enlarge, reduce, or scroll a screen displayed in the display unit 210. The control unit 240 changes a screen according to a user command for enlarging, reducing, or scrolling the screen, but does not transmit information on the command to the multimedia device 100. Therefore, a screen displayed in the multimedia device 100 is maintained as-is. Accordingly, a user can maintain the screen of the multimedia device 100 as-is and enlarge, reduce, or scroll the same screen.

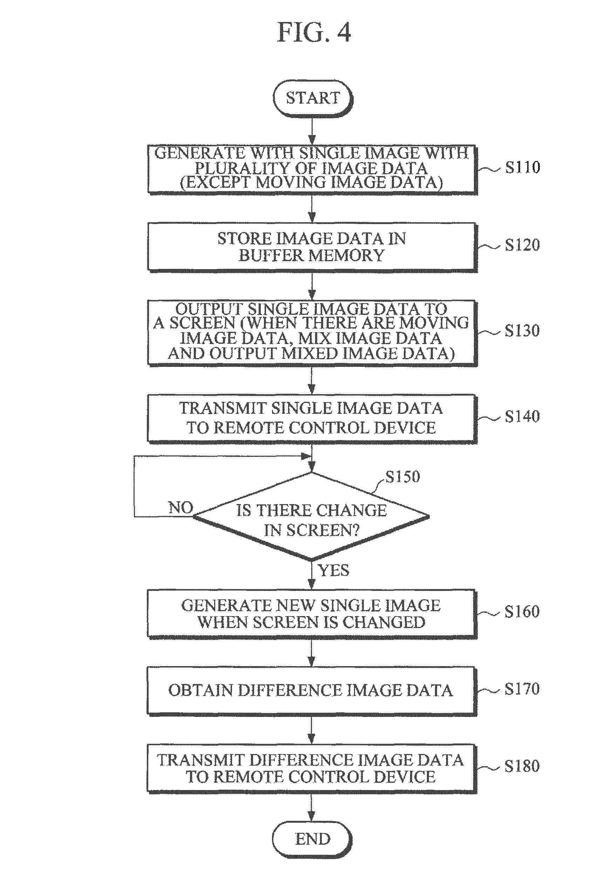

FIG. 4 is a flowchart illustrating a screen synchronization method, performed in the multimedia device, between the remote control device and the multimedia device according to an embodiment of the present invention.

The control unit 130 performs rendering on multimedia data, such as moving image contents, still image contents, graphics contents, texts, etc., to be displayed on a screen, and mixes the rendered image data to generate a single image in operation 110. In this case, moving image data may be excluded in generating the single image. The control unit 130 stores the generated single image data in the buffer memory 140 in operation 120, and outputs the generated single image data to the display unit 110 in operation 130. When the moving image data is excluded in generating the single image, the control unit 130 mixes the single image data with the moving image data before outputting the single image data to the display unit 110, and outputs the mixed single image data to the display unit 110. Also, the control unit 130 transmits the single image data to the remote control device 200 through the communication unit 120, for screen synchronization with the remote control device 200 in operation 140. Operations 120 to 140 may be performed in parallel, or performed in a predetermined order. Then, the control unit 130 detects a changed element from among a plurality of elements targeted for the single image in operation 150. When the changed element is detected, the control unit 130 performs rendering on the changed element, and generates a new single image in operation 160. The control unit 130 compares the newly generated single image with the single image stored in the buffer memory 140 to obtain a difference image in operation 170. When operation 170 is completed, the control unit 130 transmits the difference image data to the remote control device 200 in operation 180.

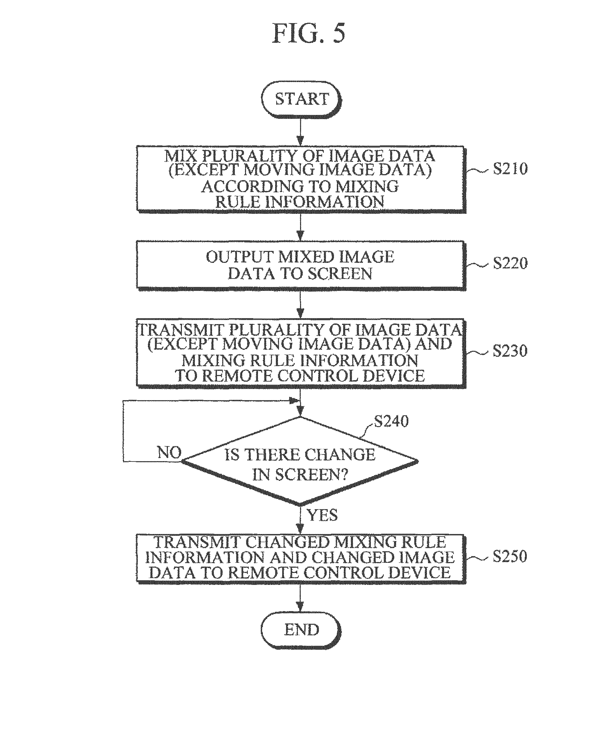

FIG. 5 is a flowchart illustrating a screen synchronization method, performed in the multimedia device, between the remote control device and the multimedia device according to another embodiment of the present invention.

The control unit 130 performs rendering on multimedia data, such as moving image contents, still image contents, graphics contents, texts, etc., to be displayed on a screen, and mixes the rendered image data according to mixing rule information in operation 210, and outputs a mixed image to the display unit 110 in operation 220. Also, the control unit 130 transmits mixed image data and the mixing rule information to the remote control device 200 through the communication unit 120, for screen synchronization with the remote control device 200 in operation 230. Operations 220 and 230 may be performed in parallel, or performed in a predetermined order. Subsequently, the control unit 130 detects a changed element from among moving image contents, still image contents, one or more graphics contents, texts, and the mixing rule information in operation 240. Here, the moving image contents may be excluded from a detection target. When the changed element is detected, the control unit 130 transmits rendered images for a changed screen element and changed mixing rule information to the remote control device 200 through the communication unit 120 in operation 250.

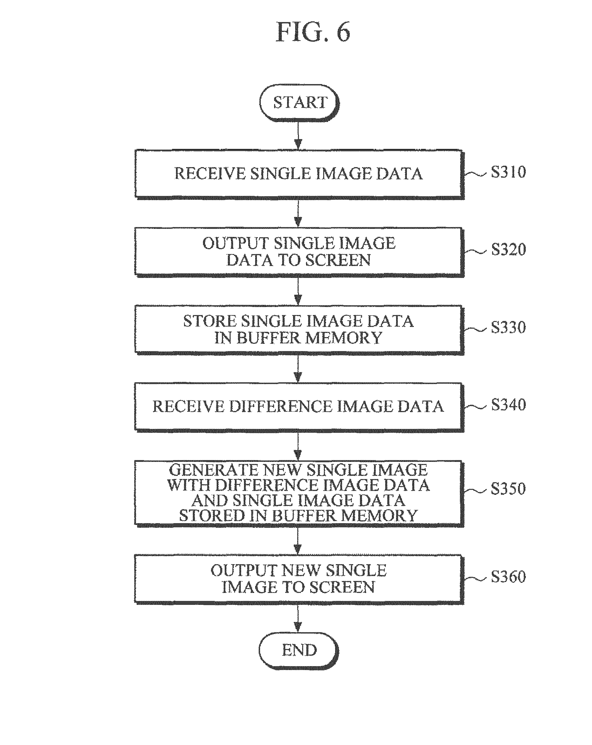

FIG. 6 is a flowchart illustrating a screen synchronization method, performed in the remote control device, between the remote control device and the multimedia device according to an embodiment of the present invention.

The control unit 240 receives single image data through the communication unit 220 in operation 310. The control unit 240 outputs the received single image data to the display unit 210 in operation 320, and stores the received single image data in the buffer memory 230 in operation 330. Operations 320 and 330 may be performed in parallel, or performed in a predetermined order. Then, the control unit 240 receives difference image data through the communication unit 220 from the multimedia device 100 in operation 340. The control unit 240 adds the received difference image data to the single image data stored in the buffer memory 230 to generate a new single image in operation 350, and outputs the generated new single image to the display unit 210 in operation 360.

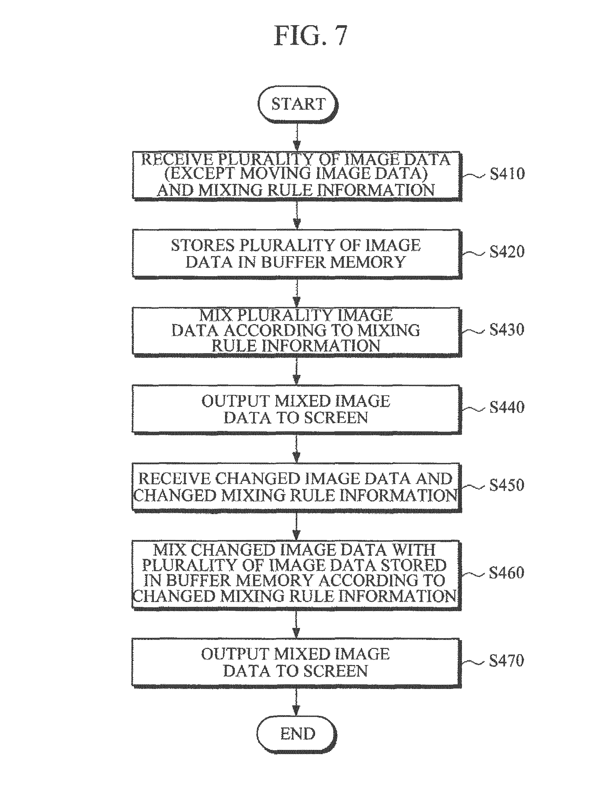

FIG. 7 is a flowchart illustrating a screen synchronization method, performed in the remote control device, between the remote control device and the multimedia device according to another embodiment of the present invention.

The control unit 240 receives a plurality of image data and mixing rule information through the communication unit 220 in operation 410. The plurality of received image data may not include moving image data. The control unit 240 stores the plurality of received image data in the buffer memory 230 in operation 420. Also, the control unit 240 mixes the plurality of received image data according to the mixing rule information in operation 430. Operations 420 and 430 may be performed in parallel, or performed in a predetermined order. When the mixing is completed, the control unit 240 outputs mixed image data to the display unit 210 in operation 440. Then, the control unit 240 receives the changed image data and the changed mixing rule information through the communication unit 220 in operation 450. The control unit 240 mixes the changed image data with the image data stored in the buffer memory 230 according to the changed mixing rule information in operation 460. When the mixing is completed, the control unit 240 outputs the newly mixed image data to the display unit 210 in operation 470.

A number of examples have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A multimedia device for screen synchronization with a remote control device, the multimedia device comprising:
a communication unit configured to communicate with the remote control device; and
a control unit configured to output a plurality of image data to a display unit, and transmit the image data, output to the display unit, to the remote control device through the communication unit.

2. The multimedia device of claim 1, wherein the control unit generates a single image with the plurality of image data before outputting the plurality of image data to the display unit, outputs the generated single image data to the display unit, and transmits the generated single image data to the remote control device through the communication unit.

3. The multimedia device of claim 2, wherein in generating the single image, when the plurality of image data comprise moving image data, the control unit generates the single image with image data except the moving image data, synthesizes the generated single image data with the moving image data, and outputs the synthesized image data to the display unit.

4. The multimedia device of claim 2, further comprising a buffer memory configured to store the generated single image data,
wherein when at least some of the single image data are changed, the control unit reflects the changed image data to generate a new single image, compares the newly generated single image data with the single image data stored in the buffer memory to obtain difference image data, and transmits the obtained difference image data to the remote control device through the communication unit.

5. The multimedia device of claim 4, wherein the control unit overwrites the newly generated single image data in the buffer memory.

6. The multimedia device of claim 1, wherein the control unit mixes the plurality of image data according to mixing rule information, outputs the mixed image data to the display unit, and transmits the mixing rule information to the remote control device through the communication unit.

7. The multimedia device of claim 6, wherein in mixing the image data, when the plurality of image data comprises moving image data, the control unit mixes image data except the moving image data according to the mixing rule information, synthesizes the mixed image data with the moving image data, and outputs the synthesized image data to the display unit.

8. The multimedia device of claim 6, wherein when the mixed image data is changed, the control unit transmits the changed image data and changed mixing rule information to the remote control device.

9. The multimedia device of claim 1, wherein the plurality of image data comprises at least one of a moving image, a still image, a graphics image, and a text image.

10. A remote control device for screen synchronization with a multimedia device, the remote control device comprising:
a display unit;
a communication unit configured to communicate with the multimedia device; and
a control unit configured to receive a plurality of image data, displayed on a screen of the multimedia device, through the communication unit from the multimedia device, and output the received image data to the display unit.

11. The remote control device of claim 10, wherein the plurality of received image data compose a single image.

12. The remote control device of claim 11, wherein the single image is composed of all image data output to the screen of the multimedia device, the all image data comprising no moving image data.

13. The remote control device of claim 12, further comprising a buffer memory configured to store the single image data,
wherein when difference image data is received through the communication unit from the multimedia device, the control unit generates a new single image with the received difference image data and the single image data stored in the buffer memory, and outputs the new single image to the display unit.

14. The remote control device of claim 13, wherein the control unit overwrites the newly generated single image data in the buffer memory.

15. The remote control device of claim 10, wherein the control unit receives mixing rule information through the communication unit from the multimedia device, mixes the plurality of received image data according to the received mixing rule information, and outputs the mixed image data to the display unit.

16. The remote control device of claim 15, further comprising a buffer memory configured to store the plurality of received image data,
wherein when changed image data and changed mixing rule information are received through the communication unit from the multimedia device, the control unit mixes the changed image data with the plurality of image data stored in the buffer memory according to the changed mixing rule information, and outputs the mixed image data to the display unit.

17. A screen synchronization method, performed by a multimedia device, between the multimedia device and a remote control device, the screen synchronization method comprising:
generating a single image with a plurality of image data, wherein when the plurality of image data comprise moving image data, the multimedia device generates the single image with image data except the moving image data;
storing the generated single image data in a buffer memory;
outputting the generated single image data to a screen, wherein when there are the moving image data, the multimedia device synthesizes the generated single image data with the moving image data and outputs the synthesized image data to the screen;
transmitting the generated single image data to the remote control device;
reflecting, when image data except the moving image data among the image data composing the single image data are changed after the transmitting, the changed image data to generate a new single image;
comparing the newly generated single image data with the single image data stored in the buffer memory to obtain difference image data; and
transmitting the obtained difference image data to the remote control device.

18. A screen synchronization method, performed by a multimedia device, between the multimedia device and a remote control device, the screen synchronization method comprising:
mixing a plurality of image data according to mixing rule information, wherein when the plurality of image data comprises moving image data, the multimedia device mixes moving image data with the plurality of image data according to the mixing rule information;
outputting the mixed image data to a screen, wherein when there is the moving image data, the multimedia device synthesizes the mixed image data with the moving image data and outputs the synthesized image data to the screen;
transmitting the image data to be mixed and the mixing rule information to the remote control device; and
transmitting, when the mixed image data is changed, the changed image data and changed mixing rule information to the remote control device.

19. A screen synchronization method, performed by a remote control device, between a multimedia device and the remote control device, the screen synchronization method comprising:
receiving single image data, composed of a plurality of image data comprising no moving image data, from the multimedia device;
outputting the received single image data to a screen;
storing the received single image data in a buffer memory;
receiving difference image data from the multimedia device;
generating a new single image with the received difference image data and the single image data stored in the buffer memory; and
outputting the newly generated single image data to the screen.

20. A screen synchronization method, performed by a remote control device, between a multimedia device and the remote control device, the screen synchronization method comprising:
receiving a plurality of image data, comprising no moving image data, and mixing rule information from the multimedia device;
storing the plurality of received image data in a buffer memory;
mixing the plurality of received image data according to the received mixing rule information;
outputting the mixed image data to a screen;
receiving changed image data and changed mixing rule information from the multimedia device;
mixing the changed image data with the plurality of image data stored in the buffer memory according to the changed mixing rule information; and
outputting the mixed image data based on the changed mixing rule information to the screen.
